# EUROPEAN PATENT SPECIFICATION

(11) **EP 2 818 315 B1**
(45) Date of publication and mention of the grant of the patent: **05.10.2016**
(21) Application number: 13751117.6
(22) Date of filing: 20.02.2013
(51) Int. Cl.: B32B 17/06, B32B 15/08, B32B 7/12, F16L 59/065, B32B 15/085, B32B 15/088, B32B 15/09, B32B 15/095, B32B 27/08, B32B 27/40

(54) **OUTSTANDINGLY IMPACT RESISTANT AND INCOMBUSTIBLE VACUUM-INSULATION-MATERIAL SEALING MEMBER**
DICHTUNGSELEMENT AUS EINEM VAKUUMISOLIERMATERIAL MIT HERAUSRAGENDER SCHLAG- UND FEUERBESTÄNDIGKEIT
ÉLÉMENT D'ÉTANCHÉITÉ EN MATÉRIAU D'ISOLATION SOUS VIDE REMARQUABLEMENT RÉSISTANT AUX CHOCS ET INCOMBUSTIBLE

(30) Priority: 20.02.2012 KR 20120017003
(43) Date of publication of application: 31.12.2014
(73) Proprietor: KCC Corporation, Seoul 137-855 (KR)
(72) Inventor: LEE, Byung Won, Cheonan-si Chungcheongnam-do 331-735 (KR); LEE, Nam Su, Wonju-si Gangwon-do 220-745 (KR); JUNG, Won Sik, Yongin-si Gyeonggi-do 448-170 (KR); RYU, Jae Seol, Cheongju-si Chungcheongbuk-do 361-140 (KR); KANG, Seong Ho, Seoul 157-928 (KR)
(74) Representative: Dietz, Christopher Friedrich
(86) International application number: PCT/KR2013/001321
(87) International publication number: WO 2013/125838

(56) References cited:
- EP-A1- 2 224 159
- WO-A1-2011/068148
- JP-A- 2006 017 209
- US-A1- 2003 134 078
- US-A1- 2005 042 432
- US-A1- 2011 165 367

## Description

### [Technical Field]

The present invention relates to a sealing member for vacuum insulation material having good impact resistance and non-inflammability, and more specifically, relates to a sealing member for vacuum insulation material comprising: glass cloth; a first outer layer selected from an inorganic oxide-deposited PET layer, a nylon layer and a deposited OPP layer; a second outer layer selected from an inorganic oxide-deposited PET layer, a nylon layer and a deposited OPP layer; an aluminum foil layer; and a polyethylene hot-melt-bonding layer, and the present sealing member can provide a vacuum insulation material which has excellent impact resistance and non-inflammability, and prevents physical-property deterioration and pinhole generation due to long-term use of the vacuum insulation material, and affords high levels of physical-property reliability and durability.

### [Background Art]

Vacuum insulation material has excellent heat insulation property 5 times or more than conventional organic/inorganic heat insulating materials since the inside of it is subjected to vacuum treatment such that convection current inside is prevented.

Vacuum insulation material usually comprises a core material, a sealing member which is a multilayered film of an aluminum layer(s) and a thermoplastic resin layer(s) for vacuum insulation as an outer material, and a getter. The sealing member is an indispensable component for maintaining the vacuum level of the vacuum insulation material, and it especially guarantees long-term durability of the vacuum insulation material by blocking atmospheric pressure primarily to keep the inside of the vacuum insulation material in a high vacuum state.

Therefore, if a sealing member with a poor ability to block gas and water is used, outside gas and water will flow into the product after long-term use, and finally the degree of vacuum will deteriorate to lower the heat insulation property. And if a sealing member with poor strength is used, pinholes are likely to be formed even by minor impact in handling, and the state of vacuum cannot be maintained.

Conventional sealing members for vacuum insulation material consist of a nylon layer or a polyethylene terephthalate (PET) layer as a protective layer, an aluminum metal layer as a blocking layer, and a polyethylene hot-melt-bonding layer (for example, Japanese Laid-open Publication Nos. 1986-027392 A and 2006-056230 A, and Korean Laid-open Publication No. 10-2011-0133384 A), which have a duration of 10∼15 years and are mainly used for vacuum insulation material of outer material of refrigerator.

EP 2 224 159 also discloses a vacuum insulation material having a multilayer structure.

However, such sealing members lack durability, impact resistance, etc. according to long-term use for 15 years or longer, and so they are limited in terms of maintaining in a high-degree vacuum continuously. Thus, it has been requested to develop a sealing member for vacuum insulation material which can maintain good gas-blocking ability and impact resistance, etc. for a long period of 30 years or longer.

### [Detailed Description]

### [Technical Purpose]

The purpose of the present invention is to provide a sealing member for vacuum insulation material such as panel which has excellent impact resistance to effectively prevent the breaking of vacuum state, good heat resistance and non-inflammability, and prevents physical-property deterioration and pinhole generation even over long-term use of the vacuum insulation material for 30 years or longer, and affords high levels of physical-property reliability and durability.

### [Technical Solution]

Thus, the present invention provides a sealing member for vacuum insulation material comprising: (1) a glass cloth; (2) a first outer layer selected from an inorganic oxide-deposited PET layer, a nylon layer and a deposited OPP layer; (3) a second outer layer selected from an inorganic oxide-deposited PET layer, a nylon layer and a deposited OPP layer; (4) an aluminum foil layer; and (5) a polyethylene hot-melt-bonding layer.

In another aspect, the present invention provides a vacuum insulation material comprising a core material; a sealing member of the present invention as an outer material; and a getter.

### [Advantageous Effects]

The sealing member for vacuum insulation material according to the present invention has improved impact resistance as compared with conventional sealing members, good heat resistance, and non-inflammability, and has a long-term durability for 30 years or longer by its perfect blocking ability. Thus, it can be used particularly for vacuum insulation material for buildings, and it also can afford excellent performance when applied to a conventional vacuum insulation material for refrigerators.

### [Brief Description of the Drawings]

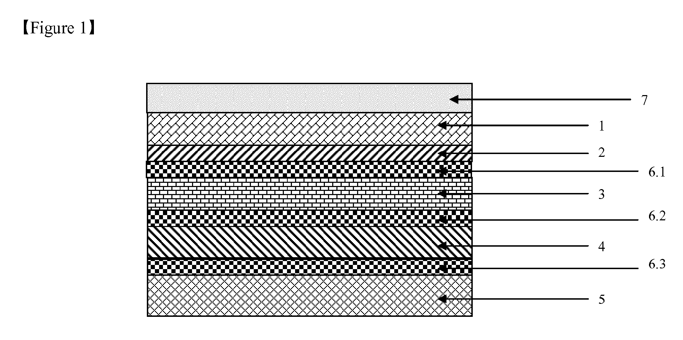

Figure 1 is a schematic diagram for a constitution of a sealing member for vacuum insulation material according to an embodiment of the present invention.
1: PET layer in GL-PET layer as a first outer layer
2: Inorganic oxide-deposited layer in GL-PET layer as a first outer layer
3: Nylon layer as a second outer layer
4: Aluminum foil layer
5: MPE hot-melt-bonding layer
6.1, 6.2 and 6.3: Urethane adhesives
7: Glass cloth

### [Mode for Invention]

Hereinafter, the present invention will be described in more detail.

The sealing member of the present invention comprises a first outer layer selected from an inorganic oxide-deposited PET layer, a nylon layer and a deposited OPP layer. The thickness of the first outer layer is preferably 10 *µ*m ∼ 30 *µ*m, and more preferably 10 *µ*m ∼ 25 *µ*m. If the thickness of the first outer layer is less than 10 *µ*m, the vacuum state can be broken easily since the number of pinholes may increase or outside air may inflow. If the thickness of the first outer layer is greater than 30 *µ*m, the handling may be problematic.

The sealing member of the present invention comprises a second outer layer selected from an inorganic oxide-deposited PET layer, a nylon layer and a deposited OPP layer. The thickness of the second outer layer is preferably 10 *µ*m ∼ 30 *µ*m, and more preferably 12 *µ*m ∼ 25 *µ*m. If the thickness of the second outer layer is less than 10 *µ*m, the vacuum state can be broken easily since the number of pinholes may increase or outside air may inflow. If the thickness of the second outer layer is greater than 30 *µ*m, the handling may be problematic.

In the present invention, the inorganic oxide-deposited PET layer (referred to as "GL-PET" hereinafter), which can be used as the first and/or second outer layer, improves the sealing member's own durability, and at the same time it lowers oxygen-permeability of the sealing member because of the deposited inorganic oxide, and the PET's moisture resistance can further lower the oxygen-permeability of the sealing member, whereby the blocking ability of the aluminum foil layer explained below is complemented. The GL-PET can be obtained by depositing an inorganic oxide such as aluminum oxide (AlOx) on polyethylene terephthalate (PET).

According to a preferred embodiment of the present invention, when the GL-PET layer is bonded with another layer (e.g., a nylon layer) the bonding is conducted in a direction that the inorganic oxide-deposited surface of the GL-PET layer meets the other layer.

In the present invention, the thickness of the GL-PET layer is preferably 10 *µ*m ∼ 15 *µ*m when used as the first outer layer, and preferably 10 *µ*m ∼ 30 *µ*m when used as the second outer layer. If the GL-PET layer is too thin, the blocking ability can be lowered. If the GL-PET layer is too thick, there may be a problem in its handling and cost may increase.

In the present invention, a nylon layer, which can be the first and/or second outer layer, improves durability, wear resistance, flexibility, etc. to prevent pinhole generation due to impact from outside during the preparation or use of the vacuum insulation material. It also prevents damage to the aluminum foil layer explained below in the course of handling the vacuum insulation material or secondary process (folding, bending, bonding, etc.) so as to keep airtightness, and improves the water-barrier property of the sealing member.

In the present invention, the thickness of the nylon layer is preferably 10 *µ*m ∼ 30 *µ*m when used as the first outer layer, and preferably 15 *µ*m ∼ 30 *µ*m when used as the second outer layer. If the nylon layer is too thin, flexibility can be lowered and the number of pinholes can increase. If the nylon layer is too thick, there may be a problem in its handling and cost may increase.

In the present invention, a deposited OPP (oriented polypropylene) layer, which can be used as the first and/or second outer layer and can be obtained by depositing an inorganic oxide on an OPP film prepared by orienting polypropylene uniaxially or biaxially, has an excellent damp-proof property. In the present invention, the thickness of the deposited OPP layer is preferably 10 *µ*m ∼ 30 *µ*m. If the deposited OPP layer is too thin, the damp-proof property can be lowered. If the deposited OPP layer is too thick, there may be a problem in its handling and cost may increase.

According to a preferred embodiment of the present invention, as the first outer layer (thickness)-the second outer layer (thickness), a combination of GL-PET layer (10 *µ*m ∼ 15 *µ*m)-nylon layer (10 *µ*m ∼ 15 *µ*m), respectively, can be used.

According to another preferred embodiment of the present invention, as the first outer layer (thickness)-the second outer layer (thickness), a combination of nylon layer (10 *µ*m ∼ 20 *µ*m)-nylon layer (15 *µ*m ∼ 30 *µ*m), respectively, can be used.

According to another preferred embodiment of the present invention, as the first outer layer (thickness)-the second outer layer (thickness), a combination of nylon layer (15 *µ*m ∼ 30 *µ*m)-GL-PET layer (10 *µ*m ∼ 15 *µ*m), respectively, can be used.

According to another preferred embodiment of the present invention, as the first outer layer (thickness)-the second outer layer (thickness), a combination of deposited OPP layer (10 *µ*m ∼ 30 *µ*m)-nylon layer (15 *µ*m ∼ 30 *µ*m), respectively, can be used.

According to another preferred embodiment of the present invention, as the first outer layer (thickness)-the second outer layer (thickness), a combination of nylon layer (15 *µ*m ∼ 30 *µ*m)-deposited OPP layer (10 *µ*m ∼ 30 *µ*m), respectively, can be used.

The sealing member of the present invention comprises an aluminum foil layer as a blocking layer. In the present invention, the thickness of the aluminum foil layer is preferably 5 *µ*m ∼ 10 *µ*m, and more preferably 7 *µ*m ∼ 9 *µ*m. If the thickness of the aluminum foil layer is less than 5 *µ*m, blocking ability can be lowered and the number of pinholes can increase. If the thickness of the aluminum foil layer is greater than 10 *µ*m, there may be a problem in its handling and the thermal bridge, and the cost may increase.

The sealing member of the present invention comprises a polyethylene layer as a hot-melt-bonding layer. Linear low-density polyethylene (LLDPE) or metallocene polyethylene (MPE) is available in the present invention.

The thickness of the polyethylene hot-melt-bonding layer is preferably 40 *µ*m ∼ 60 *µ*m, and more preferably 45 *µ*m ∼ 55 *µ*m. If the thickness of the polyethylene hot-melt-bonding layer is less than 40 *µ*m, heat seal strength can be lowered. If the thickness of the polyethylene hot-melt-bonding layer is greater than 60 *µ*m, the handling may be problematic.

The sealing member of the present invention comprises glass cloth.

Glass cloth, which is the outermost layer of the sealing member, affords not only impact resistance, but also non-inflammability because glass cloth itself has a thermal resistance that can endure up to 600 °C.

Preferably, the glass cloth used in the present invention has a basis weight of 100 ∼ 200 g/m², a density of 20 ∼ 40 strands per 2.54 cm (1 inch) × 2.54 cm (1 inch), and a length of 5,000 ∼ 10,000 m per 0.453 kg (1 pound).

In addition to the above-described layers, the sealing member of the present invention may comprise an additional layer(s), if necessary, within the scope where the purpose of the present invention can be achieved.

From the sealing member of the present invention, the order in which the layers are laminated is not especially limited, and the above-described layers and additional layers can be laminated in a proper order.

In the sealing member of the present invention, the bonding between the layers in the multilayer structure is preferably conducted with a urethane adhesive.

As the urethane adhesive, those conventionally available for the bonding of organic layer-organic layer and/or organic layer-inorganic layer can be used without restriction. According to an embodiment of the present invention, a two-component adhesive, which comprises the main component based on polyester urethane polyol and a hardener component based on aromatic polyisocyanate, can be used as the urethane adhesive, but it is not limited thereto.

Also, there is no special limitation to the method of bonding the layers. A conventional method such as gravure, direct or reverse lamination for bonding layers to prepare multilayered film can be used alone or with proper modification.

For the purpose of effectively blocking impact from the outside of the sealing member, it is desirable to design the sealing member such that the bonding strengths between the layers in the multilayer structure become as equal as possible. When the layers are bonded with the same level of strength, the overall durability can be improved greatly, while maintaining the characteristics of each layer. Therefore, it is preferable that the type and amount of the adhesive applied between the layers in the multilayer structure and the adhesion condition (e.g., pressure of the press, heating temperature, aging time, etc.) are the same.

As stated above, the sealing member of the present invention has excellent impact resistance, and good heat resistance and non-inflammability, and it has high reliability on physical property and durability for long-term use. Thus, it is especially suitable to be applied as an outer material of a vacuum insulation material.

Therefore, another aspect of the present invention provides a vacuum insulation material comprising a core material; a sealing member of the present invention as an outer material; and a getter.

The vacuum insulation material of the present invention characterized in comprising the sealing member of the present invention as an envelope, and the other parts such as core material and getter may be those conventionally used in a vacuum insulation material without limitation. According to an embodiment of the present invention, annealed glass wool or needled glass wool may be used alone or in combination as the core material. For the getter, CaO (quick lime), metal powder getter or a combination thereof (combo getter: CaO + metal powder) may be used, but it is not limited thereto.

In addition, there is no special limitation to a method of preparing a vacuum insulation material of the present invention, and a conventional method of preparing a vacuum insulation material can be used alone or with proper modification.

### [Best Mode]

Hereinafter, the present invention will be described in more detail with reference to the following examples, but the scope of the present invention should not be construed to be limited thereby in any manner.

### Examples 1∼4 and Comparative Examples 1∼4

Multilayer structure films were prepared with the layer constitutions of the types and thicknesses shown in Table 1 below. A two-component urethane adhesive (Main component: polyester urethane polyol, Hardener component: aromatic polyisocyanate) was used to bind the layers. The adhesive was applied to the surface to be adhered by a gravure method, and the layers were laminated. The type and amount of the adhesives applied between the layers in the multilayer structure, and the adhesion condition were the same.

In each of Examples 1∼4 and Comparative Examples 1 and 2, glass cloth was bonded to the resulting multilayer structure film by using the same adhesive by a gravure method to prepare a sealing member. In each of Comparative Examples 3 and 4, without bonding glass cloth, the multilayer structure film itself as prepared above was used as a sealing member.

A vacuum insulation material was prepared by using the prepared sealing member as an envelope, needled glass wool as a core material and a getter (combo getter) by using a vacuum package machine in the condition of high vacuum state of 1.33*10⁻² Pa (10⁻⁴ torr). The same core material, getter and method of preparing vacuum insulation material was used in all Examples and Comparative Examples.

The obtained vacuum insulation materials were tested for the following qualities. The results are shown in the following Table 2.
- Product defect rate (%)
- Heat conductivity (W/mK)
- Durability (1): Heat conductivity after being kept for 50 days at 100 °C (= 10 year's durability)
- Durability (2): Heat conductivity after being kept for 150 days at 100 °C (= 30 year's durability)
- Durability (3): Heat conductivity after being kept for 30 days at RH 0∼80%, and -30∼80 °C (= 10 year's durability)
- Durability (4): Heat conductivity after being kept for 80 days at RH 0∼80%, and -30∼80 °C (= 30 year's durability)
- Duration: Minimum period during which durability can be guaranteed

**[Table 1] (unit of layer thickness: µm)**

| | Example | | | | Comparative Example | | | |
|---|---|---|---|---|---|---|---|---|
| | 1 | 2 | 3 | 4 | 1 | 2 | 3 | 4 |
| First outer layer (thickness) | Nylon (15) | GL-PET (10) | Nylon (10) | Nylon (25) | PET (12) | PET (12) | PET (15) | Nylon (25) |
| Second outer layer (thickness) | GL-PET (25) | Nylon (25) | Nylon (25) | GL-PET (12) | Nylon (25) | Nylon (25) | Nylon (25) | PET (12) |
| Metal layer (thickness) | Al foil (7) | Al foil (7) | Al foil (7) | Al foil (7) | Al foil (7) | Al foil (7) | Al foil (7) | Al foil (7) |
| Hot-melt-bonding layer (thickness) | MPE (50) | MPE (50) | MPE (50) | MPE (50) | MPE (50) | MPE (50) | MPE (50) | MPE (50) |
| No. of laminations | 4 | 4 | 4 | 4 | 4 | 4 | 4 | 4 |
| Glass cloth | Applied | Applied | Applied | Applied | Applied | Applied | Not applied | Not applied |

| | | | | | | | | |
|---|---|---|---|---|---|---|---|---|
| GL-PET: aluminum oxide-deposited PET film with the layer thickness including deposition layer thickness PET: PET film without deposition Al foil: aluminum foil Glass cloth: basis weight of 170g/m², density of about 30 strands per 2.54 cm (1 inch) × 2.54 cm (1 inch) (Gosung System) | | | | | | | | |

**[Table 2]**

| | Example | | | | Comparative Example | | | |
|---|---|---|---|---|---|---|---|---|
| | 1 | 2 | 3 | 4 | 1 | 2 | 3 | 4 |
| Product defect rate | less than 2% | less than 2% | less than 2% | less than 2% | 5% | 5% | 10% | 10% |
| Heat conductivity (W/mK) | 0.0025 | 0.0024 | 0.0026 | 0.0025 | 0.0032 | 0.0034 | 0.0030 | 0.0032 |
| Durability (1) | 0.0028 | 0.0029 | 0.0027 | 0.0028 | 0.0036 | 0.0042 | 0.0034 | 0.0035 |
| Durability (2) | 0.0032 | 0.0031 | 0.0030 | 0.0031 | 0.0045 | 0.0048 | 0.0042 | 0.0043 |
| Durability (3) | 0.0029 | 0.0030 | 0.0028 | 0.0030 | 0.0041 | 0.0046 | 0.0040 | 0.0041 |
| Durability (4) | 0.0045 | 0.0050 | 0.0044 | 0.0043 | 0.0077 | 0.0083 | 0.0075 | 0.0076 |
| Duration | 30 years | 30 years | 30 years | 30 years | 15 years | 15 years | 15 years | 15 years |

As can be seen from the results of Table 2, the vacuum insulation materials of the Examples exhibited more excellent properties than those of the Comparative Examples, especially in terms of the product defect rate and durability. That is, the vacuum insulation materials of the Examples exhibited product defect rate of less than 2%, which was less than half of the 5% level of the Comparative Examples. Also, from the results of durability showing reduction in heat insulation property over time, the vacuum insulation materials of the Examples exhibited blocking and keeping ability outstandingly, better than those of the Comparative Examples. Accordingly, long-term durability for 30 years or longer could be guaranteed.

## Claims

1. A sealing member for vacuum insulation material having a multilayer structure comprising:
(1) a glass cloth;
(2) a first outer layer selected from an inorganic oxide-deposited PET layer, a nylon layer and a deposited OPP layer;
(3) a second outer layer selected from an inorganic oxide-deposited PET layer, a nylon layer and a deposited OPP layer;
(4) an aluminum foil layer; and
(5) a polyethylene hot-melt-bonding layer.

2. The sealing member for vacuum insulation material according to claim 1, wherein the thickness of the first outer layer is 10 *µ*m ∼ 30 *µ*m, the thickness of the second outer layer is 10 *µ*m ∼ 30 *µ*m, the thickness of the aluminum foil layer is 5 *µ*m ∼ 10 *µ*m, and that of the polyethylene hot-melt-bonding layer is 40 *µ*m ∼ 60 *µ*m.

3. The sealing member for vacuum insulation material according to claim 1, wherein the first outer layer is an inorganic oxide-deposited PET layer having a thickness of 10 *µ*m ∼ 15 *µ*m, and the second outer layer is a nylon layer having a thickness of 15 *µ*m ∼ 30 *µ*m.

4. The sealing member for vacuum insulation material according to claim 1, wherein the first outer layer is a nylon layer having a thickness of 10 *µ*m ∼ 20 *µ*m, and the second outer layer is a nylon layer having a thickness of 15 *µ*m ∼ 30 *µ*m.

5. The sealing member for vacuum insulation material according to claim 1, wherein the first outer layer is a nylon layer having a thickness of 15 *µ*m ∼ 30 *µ*m, and the second outer layer is an inorganic oxide-deposited PET layer having a thickness of 10 *µ*m ∼ 15 *µ*m.

6. The sealing member for vacuum insulation material according to claim 1, wherein the first outer layer is a deposited OPP layer having a thickness of 10 *µ*m ∼ 30 *µ*m, and the second outer layer is a nylon layer having a thickness of 15 *µ*m ∼ 30 *µ*m.

7. The sealing member for vacuum insulation material according to claim 1, wherein the first outer layer is a nylon layer having a thickness of 15 *µ*m ∼ 30 *µ*m, and the second outer layer is a deposited OPP layer having a thickness of 10 *µ*m ∼ 30 *µ*m.

8. The sealing member for vacuum insulation material according to claim 1, wherein each of the layers in the multilayer structure is bonded by a urethane adhesive.

9. The sealing member for vacuum insulation material according to claim 8, wherein the type and amount of the adhesive applied between the layers in the multilayer structure and the adhesion condition are the same.

10. The sealing member for vacuum insulation material according to claim 1, wherein the glass cloth has a basis weight of 100 ∼ 200 g/m², a density of 20 ∼ 40 strands per 2.54 cm (1 inch) × 2.54 cm (1 inch), and a length of 5,000 ∼ 10,000 m per 0.453 kg (1 pound).

11. A vacuum insulation material comprising a core material; a sealing member of any of claims 1 to 10 as an outer material; and a getter.

## Patentansprüche

1. Dichtungselement für Vakuumisoliermaterial, mit einer mehrschichtigen Struktur, die Folgendes umfasst:
(1) ein Glasfasergewebe;
(2) eine erste äußere Schicht, ausgewählt aus einer mit anorganischem Oxid abgeschiedenen PET-Schicht, einer Nylonschicht und einer abgeschiedenen OPP-Schicht;
(3) eine zweite äußere Schicht, ausgewählt aus einer mit anorganischem Oxid abgeschiedenen PET-Schicht, einer Nylonschicht und einer abgeschiedenen OPP-Schicht;
(4) eine Aluminiumfolienschicht; und
(5) eine Polyethylen-Heißschmelzklebeschicht.

2. Dichtungselement für Vakuumisoliermaterial nach Anspruch 1, wobei die Dicke der ersten äußeren Schicht 10 µm ∼ 30 µm beträgt, die Dicke der zweiten äußeren Schicht 10 µm ∼ 30 µm, die Dicke der Aluminiumfolienschicht 5 µm ∼ 10 µm, und jene der Polyethylen-Heißschmelzklebeschicht 40 µm ∼ 60 µm.

3. Dichtungselement für Vakuumisoliermaterial nach Anspruch 1, wobei die erste äußere Schicht eine mit anorganischem Oxid abgeschiedene PET-Schicht mit einer Dicke von 10 µm ∼ 15 µm ist, und die zweite äußere Schicht eine Nylonschicht mit einer Dicke von 15 µm ∼ 30 µm ist.

4. Dichtungselement für Vakuumisoliermaterial nach Anspruch 1, wobei die erste äußere Schicht eine Nylon-Schicht mit einer Dicke von 10 µm ∼ 20 µm ist, und die zweite äußere Schicht eine Nylonschicht mit einer Dicke von 15 µm ∼ 30 µm ist.

5. Dichtungselement für Vakuumisoliermaterial nach Anspruch 1, wobei die erste äußere Schicht eine Nylon-Schicht mit einer Dicke von 15 µm ∼ 30 µm ist, und die zweite äußere Schicht eine mit anorganischem Oxid abgeschiedene PET-Schicht mit einer Dicke von 10 µm ∼ 15 µm ist.

6. Dichtungselement für Vakuumisoliermaterial nach Anspruch 1, wobei die erste äußere Schicht eine abgeschiedene OPP-Schicht mit einer Dicke von 10 µm ∼ 30 µm ist, und die zweite äußere Schicht eine Nylonschicht mit einer Dicke von 15 µm ∼ 30 µm ist.

7. Dichtungselement für Vakuumisoliermaterial nach Anspruch 1, wobei die erste äußere Schicht eine Nylon-Schicht mit einer Dicke von 15 µm ∼ 30 µm ist, und die zweite äußere Schicht eine abgeschiedene OPP-Schicht mit einer Dicke von 10 µm ∼ 30 µm ist.

8. Dichtungselement für Vakuumisoliermaterial nach Anspruch 1, wobei jede der Schichten in der mehrschichtigen Struktur mit einem Urethanklebstoff verklebt ist.

9. Dichtungselement für Vakuumisoliermaterial nach Anspruch 8, wobei der Typ und die Menge des Klebstoffs, der zwischen den Schichten in der mehrschichtigen Struktur aufgebracht ist, und die Klebebedingungen dieselben sind.

10. Dichtungselement für Vakuumisoliermaterial nach Anspruch 1, wobei das Glasfasergewebe ein Basisgewicht von 100 ∼ 200 g/m², eine Dichte von 20 ∼ 40 Fäden pro 2,54 cm (1 inch) x 2,54 cm (1 inch), und eine Länge von 5.000 ∼ 10.000 m pro 0,453 kg (1 pound) aufweist.

11. Vakuumisoliermaterial, umfassend ein Kernmaterial; ein Dichtungselement nach einem der Ansprüche 1 bis 10 als Außenmaterial; und einen Getter.

## Revendications

1. Un élément d'étanchéité pour un matériau d'isolation sous vide, avec une structure multicouche comprenant :
(1) un tissu de fibres de verre ;
(2) une première couche extérieure, sélectionnée d'une couche de PET déposée d'un oxyde inorganique, une couche de nylon, et une couche déposée de polypropylène orienté ;
(3) une seconde couche extérieure, sélectionnée d'une couche de PET déposée d'un oxyde inorganique, une couche de nylon, et une couche déposée de polypropylène orienté (OPP) ;
(4) une couche de feuille d'aluminium ; et
(5) une couche adhésive thermofusible de polyéthylène.

2. L'élément d'étanchéité pour un matériau d'isolation sous vide selon la revendication 1, dans lequel l'épaisseur de la première couche extérieure est 10 µm ∼ 30 µm, l'épaisseur de la seconde couche extérieure est 10 µm ∼ 30 µm, l'épaisseur de la couche de feuille d'aluminium est 5 µm ∼ 10 µm, et cela de la couche adhésive thermofusible de polyéthylène est 40 µm ∼ 60 µm.

3. L'élément d'étanchéité pour un matériau d'isolation sous vide selon la revendication 1, dans lequel la première couche extérieure est une couche de PET déposée d'un oxyde inorganique avec une épaisseur de 10 µm ∼ 15 µm, et la seconde couche extérieure est une couche de nylon avec une épaisseur de 15 µm ∼ 30 µm.

4. L'élément d'étanchéité pour un matériau d'isolation sous vide selon la revendication 1, dans lequel la première couche extérieure est une couche de nylon avec une épaisseur de 10 µm ∼ 20 µm, et la seconde couche extérieure est une couche de nylon avec une épaisseur de 15 µm ∼ 30 µm.

5. L'élément d'étanchéité pour un matériau d'isolation sous vide selon la revendication 1, dans lequel la première couche extérieure est une couche de nylon avec une épaisseur de 15 µm ∼ 30 µm, et la seconde couche extérieure est une couche de PET couchée d'un oxyde inorganique avec une épaisseur de 10 µm ∼ 15 µm.

6. L'élément d'étanchéité pour un matériau d'isolation sous vide selon la revendication 1, dans lequel la première couche extérieure est une couche déposée d'OPP avec une épaisseur de 10 µm ∼ 30 µm, et la seconde couche extérieure est une couche de nylon avec une épaisseur de 15 µm ∼ 30 µm.

7. L'élément d'étanchéité pour un matériau d'isolation sous vide selon la revendication 1, dans lequel la première couche extérieure est une couche de nylon avec une épaisseur de 15 µm ∼ 30 µm, et la seconde couche extérieure est une couche déposée d'OPP avec une épaisseur de 10 µm ∼ 30 µm.

8. L'élément d'étanchéité pour un matériau d'isolation sous vide selon la revendication 1, dans lequel chacune des couches dans la structure multicouche est collée par un adhésif d'uréthane.

9. L'élément d'étanchéité pour un matériau d'isolation sous vide selon la revendication 8, dans lequel le type et la quantité de l'adhésif appliqué entre les couches dans la structure multicouche, et les conditions de l'adhésion sont les mêmes dans tous les cas.

10. L'élément d'étanchéité pour un matériau d'isolation sous vide selon la revendication 1, dans lequel le tissu de fibres de verre a un poids de base de 100 ∼ 200 g/m², une densité de 20 ∼ 40 filaments par 2,54 cm (1 inch) x 2,54 cm (1 inch), et une longueur de 5 000 ∼ 10 000 m par 0,453 kg (1 pound).

11. Un matériau d'isolation sous vide, comprenant un matériau du noyau ; un élément d'étanchéité selon l'une quelconque des revendications 1 à 10 en tant que matériau extérieur ; et un piège à gaz.
